# EUROPEAN PATENT APPLICATION

(11) **EP 4 789 958 A1**
(43) Date of publication of application: **12.08.2026**
(21) Application number: 26155927.2
(22) Date of filing: 03.02.2026
(51) Int. Cl.: B62K 5/10

(54) **MOBILE UNIT AND VEHICLE**

(30) Priority: 03.02.2025 JP 2025016161
(71) Applicant: Tsubakimoto Chain Co., Osaka 530-0005 (JP)
(72) Inventor: Kanki, Koji, Osaka 530-0005 (JP); Matsumoto, Yutaka, Osaka 530-0005 (JP)
(74) Representative: dompatent

(57) **Abstract**

In order to improve traveling stability and maneuverability, to improve the freedom in designing layout, to achieve easy assembly and adjustment, and to achieve ride quality suitable for a user, with a simple configuration, a mobile unit includes a pair of left and right wheels that are supported by respective swing arms, and each of which moves up and down alternately in an operative association with the other. Neutral return mechanisms include respective extensible members each of which is caused to extend and retract by swinging motion of the swing arm corresponding thereto, and each of the neutral return mechanisms is configured such that torque generated by the restoring force of the extensible member and exerted to the swing arm remains substantially constant regardless of the amount of the swinging motion of the swing arm. A vehicle includes the mobile unit described above.

## Description

### BACKGROUND OF THE INVENTION

### 1. Field of the Invention

The present invention relates to a mobile unit including a pair of left and right wheels each of which is supported about a swinging axis extending in the horizontal direction, for example, in a manner allowing each of the wheels to move up and down alternately with the other in an operative association, and to a vehicle including the mobile unit.

### 2. Description of the Related Art

As one example of vehicles in which at least one of the front and rear wheels includes a pair of left and right wheels, a vehicle having a left-and-right two-wheel independent suspension system has been known. Such a two-wheel independent suspension system includes a shock-absorbing mechanism configured to support the pair of left and right wheels in a manner allowing each of the wheels to swing up and down alternately with the other in an operative association. With such a configuration, the shock-absorbing mechanism not only absorbs the shock at the time of traveling but generates a reactive force (restoring force) for bringing back the wheels to the neutral position.

Japanese Patent Application Publication No. 2009-248696 discloses a configuration that includes left and right assist arms rotatably supporting a pair of respective assist wheels; in which the left and right assist arms are coupled to a yoke-like arm, via respective springs; in which the yoke-like arm is supported on a body frame in a manner swingable in the left and right directions with respect to the vehicle body; and the left and right assist arms are further coupled to a bracket that is fixed to the body frame, via respective shock absorbers. With this configuration, elastic force is exerted substantially equally to the assist wheels, so that the vehicle is allowed to travel stably. Furthermore, with the synergistic effect of the springs and the shock absorbers, it is possible to suppress wobbling motions.

Further, as a system for establishing an operative association between an alternating up and down motion of each of a pair of wheels with that of the other, a system using hydraulic cylinder control, as disclosed in Japanese Patent Application Publication No. 2019-209809, has been publicly known.

### SUMMARY OF THE INVENTION

In the configuration including a spring member as a shock-absorbing mechanism, as disclosed in Japanese Patent Application Publication No. 2009-248696, however, as the amount of the swinging motion of the arm members supporting the wheels increases, the reactive force of the spring members also increases monotonically at a constant rate. Therefore, the hardness of the swinging motion is affected by the reactive force of the springs. Accordingly, in settings where the spring extends and retracts in the same direction as the direction of a line tangent on a circle about the swinging axis of the arm member, or where the spring member forms an inclination of a certain angle with respect to the extending direction of the arm member, although stability can be improved, smooth swinging motion of the pivoting member may be obstructed while the vehicle is traveling a sloped surface or curved surface, for example. As a result, the traveling stability and maneuverability of the vehicle may deteriorate.

Furthermore, because each of the arm members swings in an operative association with the other, the spring members provided to these respective arm members may interfere each other and fail to exert appropriate reactive force.

Still furthermore, the operation associating mechanism disclosed in Japanese Patent Application Publication No. 2009-248696 also has a problem in reducing the freedom in device layout, and the operation associating mechanism disclosed in Japanese Patent Application Publication No. 2019-209809 has a problem in increasing the manufacturing cost, due to the complexity of its structure.

The present invention has been made on the basis of the circumstances described above, and an object of the present invention is to provide a mobile unit, and a vehicle including a mobile unit capable of improving the stability at the time of traveling and maneuverability with a simple structure, of providing greater freedom in the design layout, easy to assemble and to make adjustments, and capable of achieving ride quality suitable for a user.

The present invention solves the problem described above by providing a mobile unit including: a pair of left and right wheels; a left wheel support mechanism that swingably supports the left wheel about a swinging axis extending in a left-right direction; a right wheel support mechanism that swingably supports the right wheel about the swinging axis; a frame unit that supports the left wheel support mechanism and the right wheel support mechanism; and an operation associating mechanism that causes, with respect to a direction of swinging motion of one of the wheels, another one of the wheels to swing in an opposite direction, by establishing an operative association between the swinging motion of the one and the swinging motion of the other, in which each of the left wheel support mechanism and the right wheel support mechanism includes: a swing arm having one end connected to an axle of the wheels, and another end connected swingably to the frame unit about the swinging axis; and a neutral return mechanism that brings the swing arm back to a neutral state, and the neutral return mechanism includes an extensible member that is caused to extend and retract by swinging motion of the swing arm, and that is configured such that a restoring force of the extensible member exerts substantially constant torque to the swing arm regardless of an amount of the swinging motion of the swing arm.

With the mobile unit and the vehicle including the mobile unit according to the present invention, basically, by causing each of the pair of wheels to move up and down in an operative association with the other, it is possible to equalize the contact pressure between the wheels and the ground. Furthermore, with the neutral return mechanism configured in such a manner that the torque of the extensible member exerted to the swing arm remains substantially constant regardless of the amount of swinging motion of the swing arm, the extensible member can generate torque required for bringing the swing arm back to the neutral position without obstructing the swinging motion of the swing arm. For this reason, the user is enabled to tilt the entire vehicle body with his/her body at the time of traveling a sloped surface or traveling around a curved surface, with improved traveling stability and maneuverability, and a lower risk of falling, with a simple structure.

Furthermore, because the neutral return mechanism can be positioned in the space where the swing arms are positioned in the left-right direction, it is possible to reduce the size and to improve the degree of freedom in designing the layout. In this manner, it becomes possible to make effective use of the space between the pair of wheels, e.g., to install a carrier between the wheels.

Still furthermore, because the ride quality or comfort of the vehicle can be changed easily by replacing the extensible members as needed, it is possible to achieve the ride quality suitable for the needs and preferences of the user.

Furthermore, by using a configuration in which the extensible member is disposed in an orientation extending in a direction substantially in parallel with the direction in which the swing arm extends, it is possible to inhibit the restoring force of the extensible member from giving an adverse effect on cornering performance of the vehicle body and the stability at the time of traveling a sloped surface. Therefore, improved traveling stability and maneuverability can be achieved.

Furthermore, with a configuration including a relief mechanism in which the extensible member has a first fulcrum or a second fulcrum that is displaceable, the extensible member corresponding to the left wheel support mechanism and the extensible member corresponding to the right wheel support mechanism do not interfere with each other, and each of the neutral return mechanisms can operate independently. Therefore, the torque required for the neutral return mechanisms to bring the swing arms back to the neutral positions can be achieved reliably, and spring members having a small spring constant can be used as the extensible members.

Furthermore, because there are a small number of parts and all of the main parts are provided at easily accessible positions outside the vehicle, assembly and adjustments can be carried out easily.

Furthermore, by using a configuration in which one end or the other end of the extensible member is attached to the relief mechanism in a manner movable within the opening provided to the relief mechanism, the stability can be improved with the use of a simple and cost-effective configuration.

Still furthermore, by providing the operation associating mechanism with a first swinging rotation body and a second swinging rotation body that are caused to rotate in an operative association with swinging motion of the swing arms; a first transmitting rotation body and a second transmitting rotation body that are integrally rotatably connected to each other by sharing the same rotation axis; and a first transmitting strip and a second transmitting strip provided so as to cause the first swinging rotation body and the second swinging rotation body to rotate in opposite directions, and by configuring the operation associating mechanism in such a manner that rotation of the first swinging rotation body is transmitted to the first transmitting rotation body by the first transmitting strip, and that the rotation of the second swinging rotation body is transmitted to the second transmitting rotation body by the second transmitting strip, the operative association between the up and down motions of the left and the right wheels can be established reliably. As a result, the contact pressure between the left and right wheels and the ground can be equalized regardless of the conditions of the road surface or the traveling conditions. Therefore, it is possible to achieve high traveling stability and high maneuverability.

### BRIEF DESCRIPTION OF THE DRAWINGS

FIG. 1 is a perspective view illustrating a configuration of an example of a vehicle according to the present invention;
FIG. 2 is a perspective view illustrating a configuration of a mobile unit implementing a rear wheel unit, in the vehicle illustrated in FIG. 1;
FIG. 3 is a left side view of the mobile unit illustrated in FIG. 2;
FIG. 4 is a right side view of the mobile unit illustrated in FIG. 2;
FIG. 5 is a plan view illustrating a configuration of a left wheel support mechanism included in the mobile unit illustrated in FIG. 2;
FIG. 6 is a diagram illustrating a relationship between the amount of swinging motion of a swing arm and hardness of the swinging motion;
FIG. 7 is a plan view illustrating a configuration of a right wheel support mechanism included in the mobile unit illustrated in FIG. 2;
FIG. 8 is a plan view illustrating a configuration of an operation associating mechanism included in the mobile unit illustrated in FIG. 2;
FIG. 9 is a cross-sectional view taken along line A-A in FIG. 8;
FIG. 10 is a cross-sectional view taken along line B-B in FIG. 8;
FIG. 11 is a rear view illustrating a state in which a vehicle body becomes inclined as the vehicle travels around a left curve, in which the vehicle illustrated in FIG. 1 is turned leftward, on a flat road surface;
FIG. 12A is a left side view of the mobile unit, as viewed from the axle direction of the left wheel;
FIG. 12B is a right side view of the mobile unit, as viewed from the axle direction of the right wheel;
FIG. 13 is a right side view schematically illustrating a configuration of another example of the mobile unit according to the present invention;
FIG. 14A is a right side view of the mobile unit with a right swing arm pivoted upward, as viewed from the axle direction of the right wheel; and
FIG. 14B is a right side view of the mobile unit with the right swing arm pivoted upward, as viewed from the axle direction of the right wheel.

### DESCRIPTION OF THE PREFERRED EMBODIMENTS

The present invention will now be described using an example of an independent-suspension tricycle with two wheels on the rear side, and directions will be defined with reference to the line of sight of a user causing the tricycle to travel forward in a straight direction.

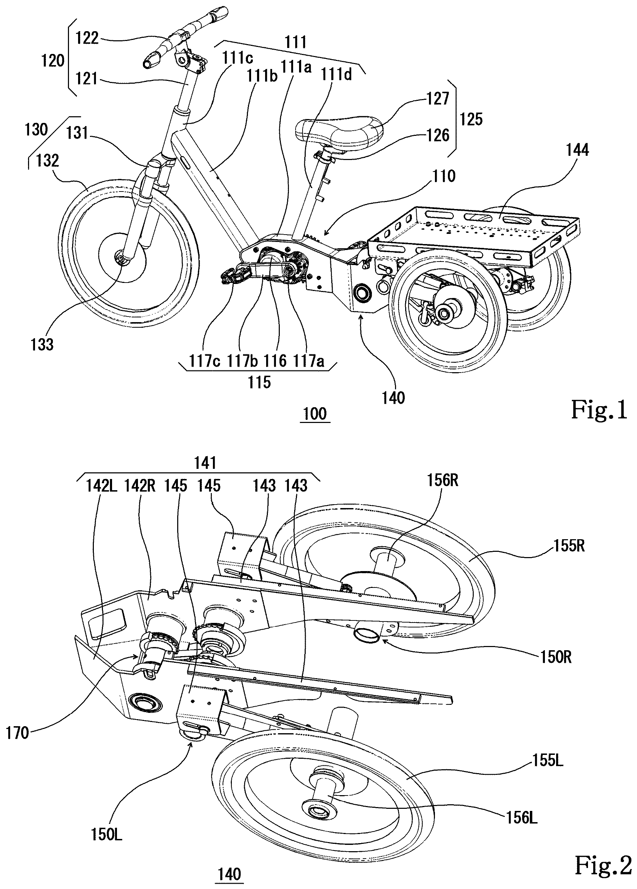

As illustrated in FIG. 1, a tricycle 100 according to this embodiment includes a body 110, a front wheel unit 130 including a front wheel 132 that is a steering wheel, and a rear wheel unit 140 including a pair of left and right wheels that are driving wheels.

The body 110 includes a body frame 111, a drivetrain 115 for transmitting the rotational force generated by a drive unit 116 assisting pedaling force of the user, as well as the pedaling force of the user pedaling the pedal 117c, to each wheel of the rear wheel unit 140 as the driving force, a steering unit 120 for steering the front wheel 132, and a seat 125 where the user is seated.

The body frame 111 includes a main frame 111a defining a space where the drive unit 116 is housed, a down tube 111b extending from the front side of the main frame 111a upward toward the front, a head tube 111c provided to the front end of the down tube 111b and extending vertically, and a seat tube 111d provided to the center of the main frame 111a and extending upward.

The drivetrain 115 includes the drive unit (including an electric motor) 116, a crankshaft 117a mounted rotatably on the drive unit 116 in a manner extending in the left-right direction, crank arms 117b mounted on the respective ends of the crankshaft 117a, pedals 117c mounted on the respective distal ends of the crank arms 117b, and a power transmission mechanism using a chain or a belt as a transmitting member. The power transmission mechanism includes a driving sprocket disposed coaxially with the crankshaft 117a and rotating with the crankshaft 117a, a driven sprocket rotating with the wheels of the rear wheel unit 140, and a transmission member stretched between the driving sprocket and the driven sprocket. The driving sprocket, the driven sprocket, and the transmission member are not illustrated in FIG. 1 for the ease of understanding.

The steering unit 120 includes a handle stem 121 rotatably inserted into the head tube 111c, and a handle 122 fixed to the upper end of the handle stem 121.

The seat 125 includes a seat pipe 126 inserted into the seat tube 111d, and a saddle 127 mounted on the upper end of the seat pipe 126.

The front wheel unit 130 has a front fork 131 fixed to the bottom end of the handle stem 121, and the bottom end of the front fork 131 has an axle 133 by which the front wheel 132 is supported rotatably.

As illustrated in FIGS. 2 to 4, the rear wheel unit 140 is configured as a mobile unit including: a left wheel 155L that is the left rear wheel, and a right wheel 155R that is the right rear wheel; a left wheel support mechanism 150L supporting the left wheel 155L swingably about a swinging axis Sa that extends in the left-right direction, and a right wheel support mechanism 150R supporting the right wheel 155R swingably about the same swinging axis Sa as that of the left wheel support mechanism 150L; a frame unit 141 supporting the left wheel support mechanism 150L and the right wheel support mechanism 150R; and an operation associating mechanism 170 causing, with respect to the direction of swinging motion of one of the wheels, the other one to swing in the opposite direction, in an operative association with the swinging motion of the one.

The frame unit 141 includes: a pair of side panels 142L, 142R that face each other in the left-right direction and extend in the front-back direction; carrier base supporting plates 143, 143 each of which has a flat-plate like shape and provided on the outer surface of corresponding one of the side panels 142L, 142R, along the upper end of the side panel 142L, 142R, in a manner extending in the front-back direction; a carrier base 144 that is fixed to the top surfaces of the carrier base supporting plates 143, 143; and fulcrum brackets 145, 145 each of which is fixed to the bottom surface of the carrier base 144 along corresponding one of the side edges of the carrier base 144, and serves as a support for supporting one end of corresponding one of extensible members 165L, 165R, to be described later.

In the embodiment, the fulcrum brackets 145 are fixed to the carrier base 144 by screwing, and the carrier base 144 has screw insertion holes provided at positions aligned with respect to each other, at predetermined intervals in the longitudinal direction. With this configuration, it is possible to adjust the positions where the fulcrum brackets 145 are fixed to the carrier base 144 in the front-back direction, so that the degree of freedom in selecting the extensible members 165L, 165R can be improved, and therefore, the ride quality or comfort of the tricycle 100 can be adjusted easily.

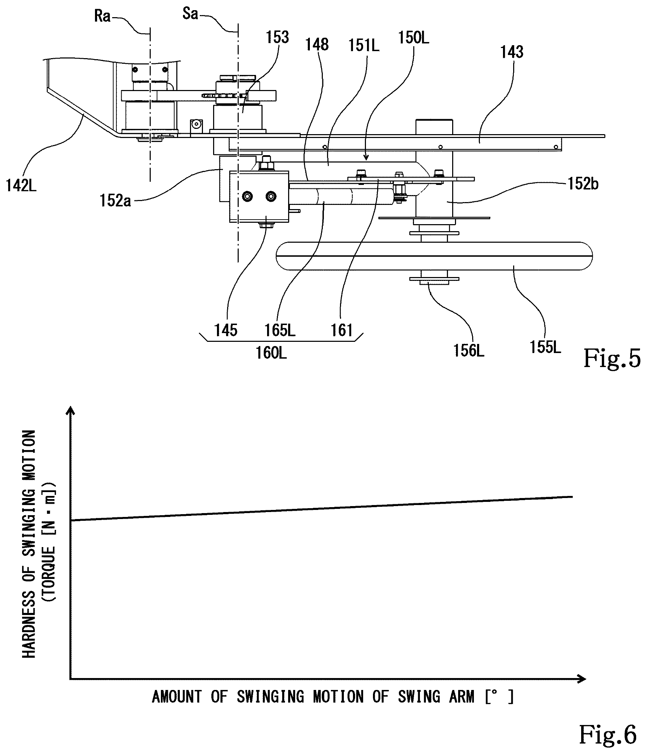

As illustrated in FIG. 5, the left wheel support mechanism 150L includes a rod-like swing arm 151L the respective ends of which are provided with bosses 152a, 152b, respectively, that extend in the left-right direction, and a neutral return mechanism 160L for bringing the swing arm 151L back to the neutral state.

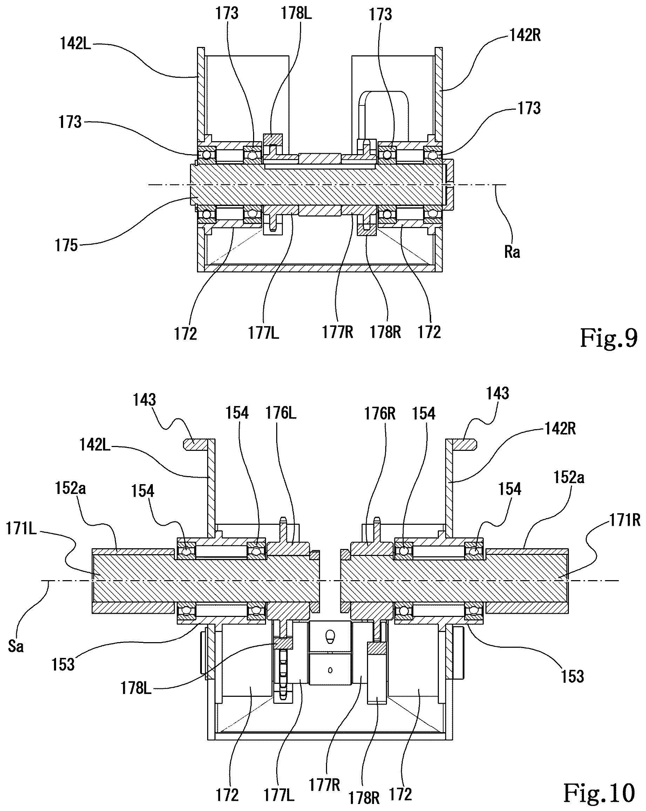

Into the boss 152a provided to one end of the swing arm 151L, a swinging shaft 171L is fitted. The swinging shaft 171L is rotatably supported by a sleeve member 153, with a bearing 154 disposed therebetween. The sleeve member 153 is attached to the side panel 142L, coaxially with the swinging axis Sa (see FIG. 10). The wheel 155L, having an axle 156L rotatably supported in the boss 152b provided to the other end of the swing arm 151L, is thus supported swingably about the swinging axis Sa.

The neutral return mechanism 160L includes an extensible member 165L that is caused to extend and retract in accordance with swinging motion of the swing arm 151L. In this embodiment, the extensible member 165L is a tension spring, for example.

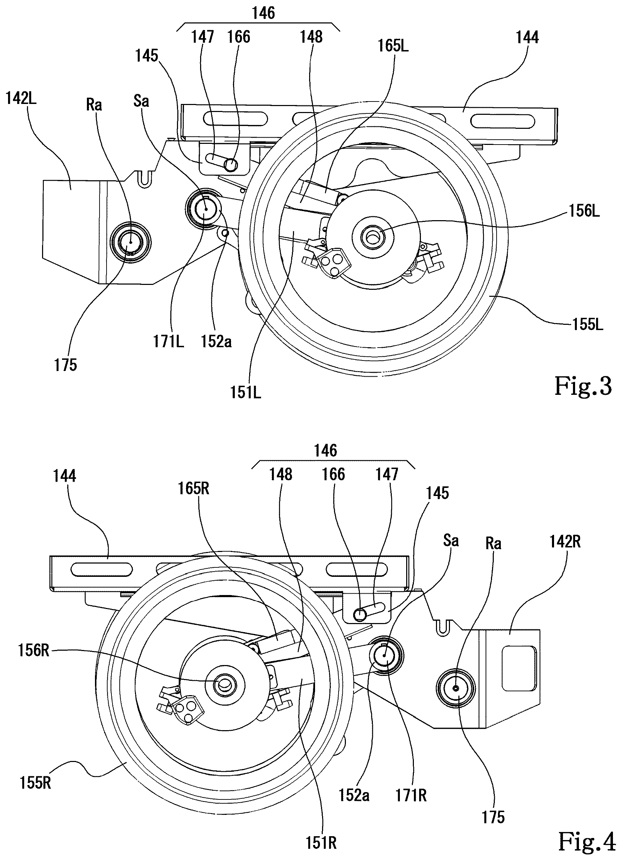

The extensible member 165L has one end connected to the fulcrum bracket 145 provided to the frame unit 141, and a first fulcrum that is the point where the one end of the extensible member 165L is connected to the frame unit 141 is positioned near the swinging axis Sa of the swing arm 151L (see FIG. 3).

The other end of the extensible member 165L is fixed to a support panel 161 that is a support provided to the swing arm 151L.

In this manner, in the embodiment, the extensible member 165L is disposed substantially in parallel with the direction in which the swing arm 151L extends, and the extensible member 165L extends and retracts in directions different from the swinging directions of the swing arm 151L. The expression "substantially in parallel" herein includes not only a configuration in which these two are completely in parallel with each other, but also a configuration in which these two can be considered as being substantially in parallel with each other, even with the presence of slight inclination.

By positioning the extensible member 165L in the manner described above, it is possible to reduce the degree by which the hardness of swinging motion changes in response to a change in the amount of the swinging motion of the swing arm 151L, as illustrated in FIG. 6. More specifically, when the swinging motion of the swing arm 151L is in the direction causing the extensible member 165L to extend (when the swing arm 151L swings downward), as the amount of swinging motion of the swing arm 151L increases, the restoring force of the extensible member 165L also increases, but the angle formed between the swing arm 151L and the extensible member 165L decreases. Therefore, it is possible to configure the neutral return mechanism 160L in such a manner that the torque exerted to the swing arm 151L by the restoring force of the extensible member 165L remains substantially constant regardless of the swinging amount of the swing arm 151L. Therefore, it is not only possible set the torque required for the neutral return mechanism 160L to bring the swing arm 151L back to the neutral position to an appropriate value not obstructing the vehicle from making a turn, but also to improve the maneuverability of the vehicle at the time of traveling along a sloped surface, for example.

The torque exerted to the swing arm 151L being "substantially constant" as mentioned herein means that the rate of change of the torque (Tmax-Tmin)/[(Tmax+Tmin)/2] within the swinging range of the swing arm 151L is within a range of 30% or less.

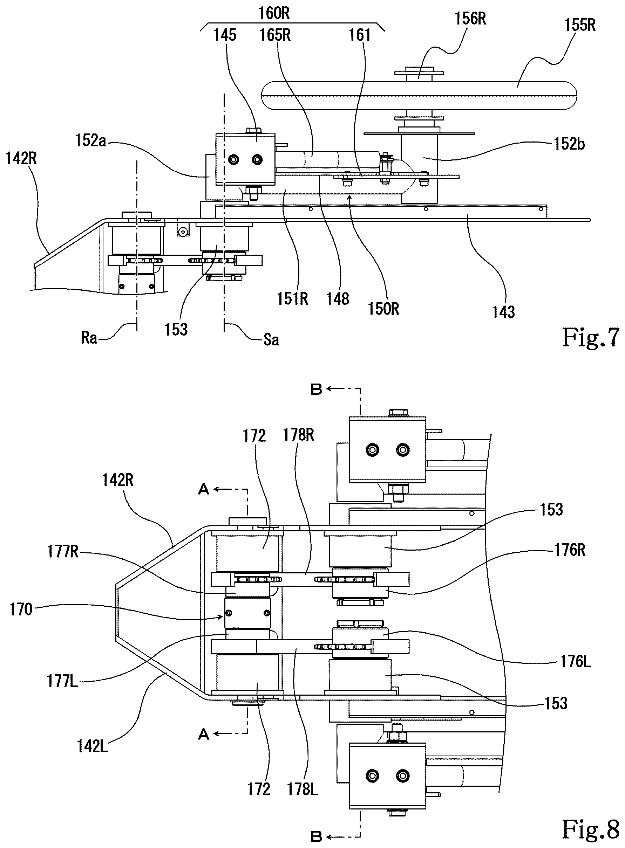

The right wheel support mechanism 150R has the same structure as the left wheel support mechanism 150L, as illustrated in FIG. 7, and includes a rod-like swing arm 151R the respective ends of which are provided with bosses 152a, 152b, respectively, that extend in the left-right direction, and a neutral return mechanism 160R for bringing the swing arm 151R back to the neutral state.

Into the boss 152a provided to one end of the swing arm 151R, a swinging shaft 171R is fitted. The swinging shaft 171R is rotatably supported by a sleeve member 153, with a bearing 154 disposed therebetween. The sleeve member 153 is attached to the side panel 142R, coaxially with the swinging axis Sa (see FIG. 10). The wheel 155R, having an axle 156R rotatably supported in the boss 152b provided to the other end of the swing arm 151R, is thus supported swingably about the swinging axis Sa.

The neutral return mechanism 160R includes the extensible member 165R that is caused to extend and retract in accordance with swinging motion of the swing arm 151R. In this embodiment, the extensible member 165R is a tension spring, for example.

The extensible member 165R has one end connected to the fulcrum bracket 145 of the frame unit 141, and a first fulcrum that is the point where the one end of the extensible member 165R is connected to the frame unit 141 is positioned near the swinging axis Sa of the swing arm 151R (see FIG. 4).

The other end of the extensible member 165R is fixed to a support panel 161 provided to the swing arm 151R.

In this manner, in the embodiment, the extensible member 165R is disposed in the direction substantially in parallel with the direction in which the swing arm 151R extends, and the extensible member 165R is extended and retracted in directions different from the swinging directions of the swing arm 151R. Therefore, it is possible to reduce the change in the swinging hardness with respect to a change in the amount of swinging motion of the swing arm 151R, in other words, to keep the torque exerted by the restoring force of the extensible member 165R to the swing arm 151R substantially constant, regardless of the amount of swinging motion of the swing arm 151R. Therefore, it is not only possible to set the torque required for the neutral return mechanism 160R to bring the swing arm 151R back to the neutral position to an appropriate value not obstructing the vehicle from making a turn, but also to improve the maneuverability of the vehicle at the time of traveling on a sloped surface, for example.

The tricycle 100 according to the embodiment is provided, as illustrated in FIGS. 3 and 4, with a relief mechanism 146 capable of displacing the first fulcrum that is the point where the one end of the extensible member is connected to the frame unit 141 so that the extensible member in one of the neutral return mechanisms is allowed to exert a torque to the swing arm while the extensible member in the other is not. The relief mechanisms 146 included in the respective left and right neutral return mechanisms 160L, 160R both have the same configuration. The configuration of the relief mechanism 146 in the neutral return mechanism 160L corresponding to the left wheel 155L will be described below, and description of the relief mechanism 146 in the neutral return mechanism 160R corresponding to the right wheel 155R will therefore be omitted.

As illustrated in FIG. 3, a shaft member 166 is provided to one end of the extensible member 165L, and by inserting the shaft member 166 into openings 147 provided to respective side walls of the fulcrum brackets 145 having a U-shaped cross section, the extensible member 165L is rotatably attached to the fulcrum bracket 145 while allowing one end of the extensible member 165L to move inside the openings 147. In this embodiment, each of the openings 147 is a hole having an elongated shape inclined upward toward the front, and each of the arcuate portions of the elongated hole has a diameter larger than the diameter of the shaft member 166. Further, a dog plate 148 extending along the swing arm 151L is fixed to the support panel 161. The upward swinging motion of the swing arm 151L causes the dog plate 148 to push the shaft member 166 upward, so that the first fulcrum of the extensible member 165L moves inside the openings 147 without coming into contact with the inner surfaces of the openings 147.

By providing the left and right neutral return mechanisms 160L, 160R with the relief mechanisms 146, respectively, the neutral return mechanisms 160L, 160R are allowed to operate independently of each other.

As illustrated in FIGS. 8 to 10, the operation associating mechanism 170 includes: a first swinging sprocket 176L that is a first swinging rotation body provided to the swinging shaft 171L on the left side; a second swinging sprocket 176R that is a second swinging rotation body provided on the swinging shaft 171R on the right side; an operation associating shaft 175 disposed in a manner extending in the left-right direction along a rotational axis Ra that extends in parallel with the swinging axis Sa; a first transmission sprocket 177L that is a first transmitting rotation body and a second transmission sprocket 177R that is a second transmitting rotation body both of which are provided to the operation associating shaft 175; a first transmission belt 178L that is a first transmission strip for transmitting the rotation between the first swinging sprocket 176L and the first transmission sprocket 177L; and a second transmission belt 178R as a second transmission strip for transmitting rotation between the second swinging sprocket 176R and the second transmission sprocket 177R.

The operation associating shaft 175 is supported rotatably by sleeve members 172, 172 that are mounted on the respective side panels 142R, 142L, with bearings 173 disposed therebetween, with the sleeve members 172, 172 being mounted coaxially with the rotational axis Ra.

In this embodiment, each of the first transmission belt 178L and the second transmission belt and 178R is implemented as a toothed belt with ends (timing belt). The first transmission belt 178L is fitted on the first swinging sprocket 176L and the first transmission sprocket 177L in a crossing belt arrangement, and a second transmission belt 178R is fitted on the second swinging sprocket 176R and a second transmission sprocket 177R in a parallel belt arrangement, so that the first and second swinging sprockets 176L and 176R can operate in association with each other to rotate in opposite directions with respect to each other.

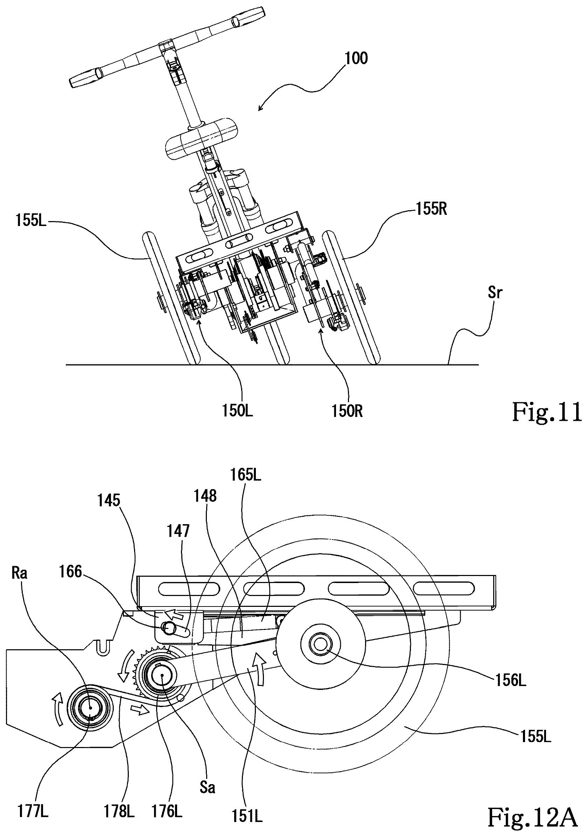

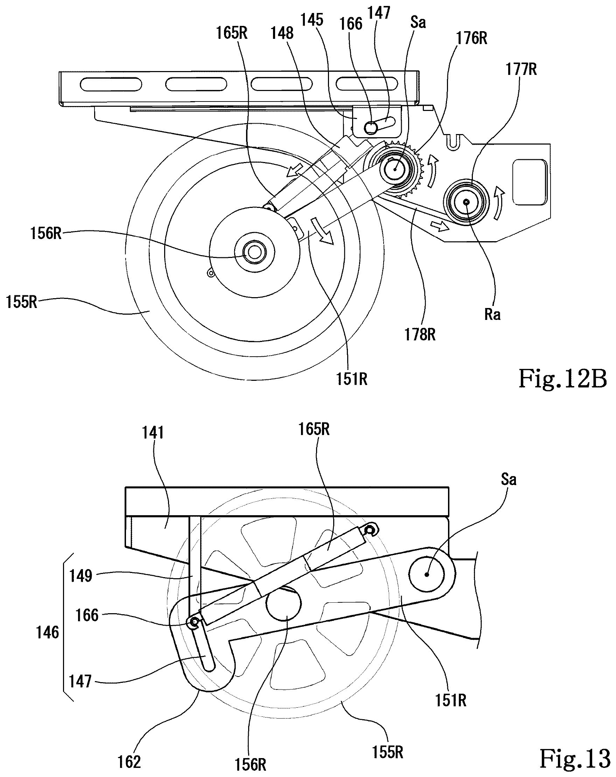

In the tricycle 100 according to this embodiment, for example, as illustrated in FIG. 11, when the user tilts the entire vehicle body with his/her body to go around a left curve, in which the tricycle 100 is caused to make a left turn on a flat road surface Sr, the left swing arm 151L swings up about the swinging axis Sa. As illustrated in FIG. 12A, as the left swing arm 151L swings, the left swinging shaft 171L is rotated and causes the first swinging sprocket 176L to rotate, and the power is transmitted to the first transmission sprocket 177L via the first transmission belt 178L. Then, as illustrated in FIG. 12B, as the first transmission sprocket 177L is rotated, the operation associating shaft 175 is rotated and causes the second transmission sprocket 177R to rotate, and the power is transmitted to the second swinging sprocket 176R via the second transmission belt 178R. As a result, the right swinging shaft 171R is rotated to cause the right swing arm 151R to swing downward about the swinging axis Sa. In the manner described above, even when the vehicle body is inclined, the contact pressure between the left and right wheels 155L, 155R and the ground can be equalized, so that smooth cornering and traveling stability as well as smooth ride or ride quality near that of two-wheel vehicle can be achieved.

Furthermore, the left dog plate 148 is caused to push the shaft member 166 in association with the swinging motion of the left swing arm 151L, and causes the shaft member 166 to move inside the openings 147 of the fulcrum bracket 145. As a result of this displacement of the first fulcrum of the left extensible member 165L, the left extensible member 165L remains in its natural state, so that no restoring force is exerted in the left extensible member 165L. By contrast, because the shaft member 166 of the right extensible member 165R is in engagement with the openings 147 of the fulcrum bracket 145, the right extensible member 165R is caused to extend by the swinging motion of the right swing arm 151R without being affected by the left extensible member 165L. Therefore, when the tricycle 100 goes back to the state of traveling straight ahead, the torque for returning the right swing arm 151R to the neutral position is exerted appropriately, so that the inclined vehicle body can be returned to the neutral state (vertical state) easily and reliably.

The operation associating mechanism 170 and the left and right neutral return mechanisms 160L, 160R at the time when the tricycle 100 goes around a left curve have been described above; however, the operation associating mechanism 170 and the left and right neutral return mechanisms 160L, 160R operate in the same manner when the tricycle 100 goes around a right curve, makes an entry into a sloped surface from a flat road surface, or passes over an obstacle such as a level difference, for example.

In the embodiment, an example of a configuration of the relief mechanism including the extensible member the first fulcrum of which is displaceable has been described; however, the relief mechanism may include an extensible member a second fulcrum of which is displaceable.

FIG. 13 is a right side view schematically illustrating a configuration of another example of the mobile unit according to the present invention.

In the mobile unit according to this embodiment, the left wheel support mechanism and the right wheel support mechanism have the same structure. Therefore, the structure of the right wheel support mechanism will be described below, and the description of the left wheel support mechanism will be omitted.

The swing arm 151R included this mobile unit includes a panel-like support 162 that supports the other end of the extensible member 165R, and that is provided in a manner extending from the boss provided to the other end of the swing arm 151R, the boss being configured to rotatably support the axle 156R of the wheel 155R.

The extensible member 165R has one end fixed to the frame unit 141 so that the first fulcrum, which is the point where the one end of the extensible member 165R is coupled to the frame unit 141, is positioned near the swinging axis Sa of the swing arm 151R.

The shaft member 166 is provided to the other end of the extensible member 165R, and by inserting the shaft member 166 into an opening 147 on the support 162 provided to the swing arm 151R, the extensible member 165R is rotatably attached to the support 162 while allowing the other end of the extensible member 165R to move inside the opening 147. This configuration serves as the relief mechanism 146 allowing displacement of a second fulcrum that is the point where the other end of the extensible member 165R is coupled to the swing arm 151R.

In this embodiment, the opening 147 is provided as, for example, an elongated hole extending along the swinging direction of the swing arm 151R, and each of the arcuate portions of the elongated hole has a diameter larger than the diameter of the shaft member 166.

In the mobile unit according to this embodiment, when the mobile unit is in the neutral state, the shaft member 166 is in abutment against a stopper member 149 provided to the frame unit 141, and is in engagement with the upper part of the opening 147 of the support 162.

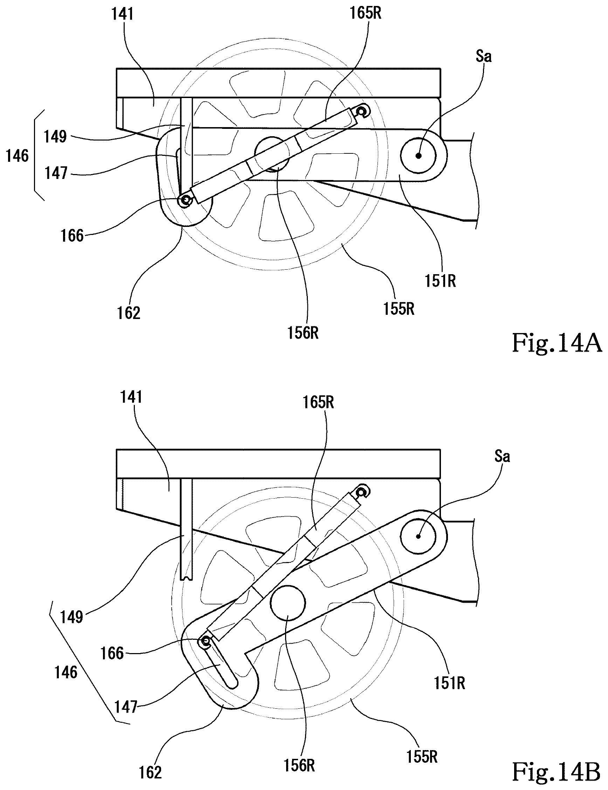

When the swing arm 151R swings upward, as illustrated in FIG. 14A, the shaft member 166 moves inside the opening 147 of the support 162. Because the second fulcrum of the extensible member 165R becomes displaced, the extensible member 165R maintains its natural state, so that no restoring force is exerted in the extensible member 165R.

By contrast, when the swing arm 151R swings downward, as illustrated in FIG. 14B, because the shaft member 166 is in engagement with the opening 147 of the support 162, the extensible member 165R is caused to extend, by the downward swinging motion of the swing arm 151R.

Because the swing arm 151R moves up and down alternately with the other swing arm, not illustrated, in an operative association, in this mobile unit, too, the neutral return mechanism can operate independently without causing an interference between the one and the other extensible members.

Although the embodiments of the present invention have been described in detail, the present invention is not limited to the embodiments described above, and various changes in design can be made without departing from the scope of the present invention as described in the claims.

For example, in the mobile unit according to the present invention, the extensible member may be implemented as a constant load spring, for example, so that the torque exerted on the swing arm remains substantially constant, regardless of the amount by which the swing arm swings.

In addition, the structure for supporting one end of the extensible member is not limited to the structure attaching the one end of the extensible member to the fulcrum bracket that is fixed to the carrier base. For example, a support may be provided to the boss formed on the one end of the swing arm, and one end of the extensible member may be attached thereto.

Furthermore, in the embodiments described above, the relief mechanism is implemented as an elongated hole, but any opening may be used as long as the shaft member can be engaged therewith when the swing arm swings in the direction in which the extensible member extends, and the shaft member is permitted to move when the swing arm swings in the direction in which the extensible members retracts.

In addition, the mobile unit according to the present invention may be used in various kinds of vehicles capable of traveling on wheels, including a vehicle having an engine, an electric motor, or the like, a bicycle driven by human power, and a trolley for carrying luggage.

Furthermore, in the embodiments described above, the wheels of the mobile unit have been explained as those functioning as rear wheels of a vehicle, but the configuration of the mobile unit is not limited thereto, and may be mounted so that the wheels function as the front wheels of a vehicle.

Furthermore, in the embodiments described above, the transmission strips are implemented as timing belts having ends, but the transmission strips may be linear bodies such as chains or ropes. Furthermore, the second transmitting strip installed in the closed-belt configuration may be endless belt, and in the case where the first and second transmitting strips are implemented as strips with ends, the teeth on each of the swinging rotation bodies and each of the transmitting rotation bodies may be partly or entirely omitted as long as the ends of the transmitting strips are fixed and capable of transmitting the power in the pulling direction.

## Claims

1. A mobile unit comprising:
a pair of left and right wheels;
a left wheel support mechanism that swingably supports the left wheel about a swinging axis extending in a left-right direction;
a right wheel support mechanism that swingably supports the right wheel about the swinging axis;
a frame unit that supports the left wheel support mechanism and the right wheel support mechanism; and
an operation associating mechanism that causes, with respect to a direction of swinging motion of one of the wheels, another one of the wheels to swing in an opposite direction, by establishing an operative association between the swinging motion of the one and the swinging motion of the other, wherein
each of the left wheel support mechanism and the right wheel support mechanism includes:
a swing arm having one end connected to an axle of the wheels, and another end connected swingably to the frame unit about the swinging axis; and
a neutral return mechanism that brings the swing arm back to a neutral state, and
the neutral return mechanism includes an extensible member that is caused to extend and retract by swinging motion of the swing arm, and that is configured such that torque exerted by a restoring force of the extensible member to the swing arm remains substantially constant regardless of an amount of the swinging motion of the swing arm.

2. The mobile unit according to claim 1, wherein the extensible member is disposed in an orientation extending in a direction substantially in parallel with a direction in which the swing arm extends.

3. The mobile unit according to claim 1, wherein
the extensible member is disposed such that one end of the extensible member, the one end serving as a first fulcrum coupled to the frame unit, is disposed at a position near the swinging axis, and the other end serving as a second fulcrum is coupled to the swing arm, and
the mobile unit further comprises relief mechanisms each allowing displacement of the first fulcrum or the second fulcrum of the extensible member so that, when the extensible member exerts torque to the swing arm in one of the neutral return mechanisms, the extensible member in the other neutral return mechanism does not exert torque to the corresponding swing arm.

4. The mobile unit according to claim 3, wherein
a shaft member is provided to one end or another end of the extensible member, and the shaft member is attached to a support provided to the frame unit or a support provided to the swing arm,
the relief mechanism includes an opening on the support provided to the frame unit or the support provided to the swing arm, and
the opening is configured to come into engagement with the shaft member when the swing arm swings in a direction causing the extensible member to extend, and to allow the shaft member to move when the swing arm swings in a direction causing the extensible member to retract.

5. The mobile unit according to claim 1, wherein the operation associating mechanism includes:
a first swinging rotation body caused to rotate about the swinging axis in an operative association with swinging motion of one of the swing arms;
a second swinging rotation body caused to rotate about the swinging axis in an operative association with swinging motion of the other swing arm;
an operation associating shaft disposed along a rotational axis extending in parallel with the swinging axis;
a first transmitting rotation body and a second transmitting rotation body that are provided on the operation associating shaft;
a first transmitting strip that transmits rotation between the first swinging rotation body and the first transmitting rotation body; and
a second transmitting strip that transmits rotation between the second swinging rotation body and the second transmitting rotation body, and
the first transmitting strip and the second transmitting strip are provided such that the first swinging rotation body and the second swinging rotation body rotate in directions opposite to each other.

6. A vehicle including a vehicle body having a main frame, and a front wheel unit and a rear wheel unit that are mounted on the main frame, wherein at least one of the front wheel unit and the rear wheel unit is implemented as the mobile unit according to any one of claims 1 to 5.
